# EUROPEAN PATENT APPLICATION

(11) **EP 1 530 324 A1**
(43) Date of publication of application: **11.05.2005**
(21) Application number: 03257020.2
(22) Date of filing: 06.11.2003
(51) Int. Cl.: H04L 12/56

(54) **A method and a network node for routing a call through a communication network**

(71) Applicant: SIEMENS AKTIENGESELLSCHAFT, 80333 München (DE)
(72) Inventor: Richard, Edwin, Southampton SO15 4HU (GB); Reeve, Andrew, Winchester Hants SO22 5AH (GB); Changpeng, Fan, Dr., 10557 Berlin (DE)

(57) **Abstract**

A method and a network node for routing a call through a communication network

The present invention comprises method and a network node for routing a call through a communication network preferably by using a Quality of Service routing algorithm comprising the following steps of or means for:
- identifying one or more critical links connected to the source node within the communication network;
- these critical links are signalled to other nodes throughout the network
- so that said routing algorithm avoids including said critical links into its route calculation.

## Description

The invention is related to a method and a network node for routing a call through a communication network preferably by using a Quality of Service routing algorithm.

This invention is used in the telecommunications field, particularly in the mobile communication field.

For finding a route from a source node to a destination node through a network, one well-known algorithm is Dijkstra's algorithm which computes the shortest path. One variant of this algorithm has sometimes been referred to as OSPF - Open Shortest Path First algorithm, since it is used in the Internet routing protocol with the same name, which has been specified by RFC 2328 and other related documents (J. Moy, "OSPF Version 2", RFC 2328, April 1998.). The use of QoS routing in mobile core networks has become necessary in order to meet the needs of multimedia applications and to improve the efficiency of the network. For QoS routing, routing algorithms must be designed to meet QoS constraints. One such algorithm is called CSPF, which stands for Constrained Shortest Path First. It is an algorithm which searches for the shortest path through a network which obeys certain constraints such as minimum bandwidth, maximum delay. This is based on the Dijkstra's algorithm for computation of the shortest path. CSPF can be used within a node running OSPF protocol.

Many studies have been performed into the benefits of QoS routing but these concentrate on the benefits of QoS routing without taking into account the effect of mobility by an ever increasing population of users.

Mobile subscribers causes varying load on network elements and routers. There are unacceptable call blocking ratios during some periods of the day for non-QoS routing algorithms (e.g. OSPF). QoS routing algorithms are shown to cope with the varying population distributions much more efficiently than non-QoS algorithms.

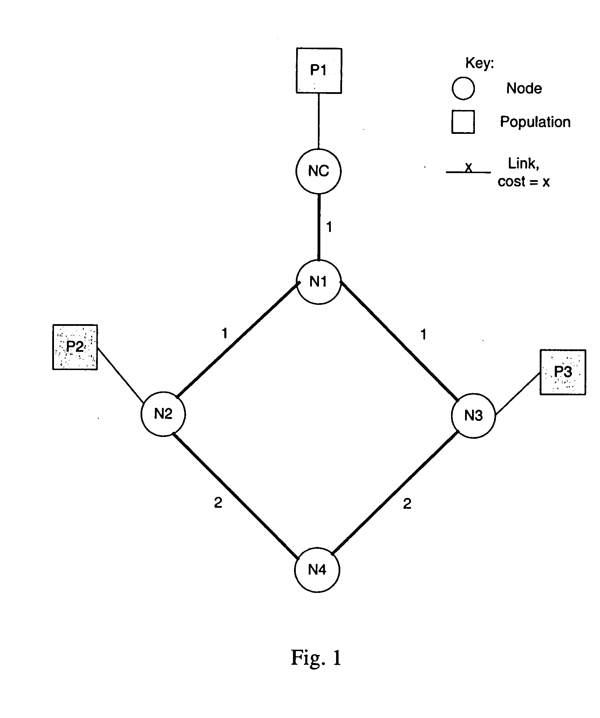

The OSPF as well as the QoS routing algorithms are prone to causing unfairness to some populations attached to the networks. This happened when the routing algorithms routed calls using a node which was critical to the isolated population for keeping it connected to the rest of the network. This is illustrated in Figure 1.

As is illustrated, node N1 is a critical node to population P1 as it is the only node that can be used to route calls to populations P2 and P3. Therefore the links between node N1 and nodes N2 and N3 are critical links to population P1. This can occur due to two reasons, firstly the cost of the "critical" links may be lower, secondly, in the case of equal cost paths the order in which they are added to the link state database may cause the critical links to be used in preference to the non-critical links. In a large network these situations can be very difficult to avoid, especially when using multi-vendor equipment.

In either of the cases outlined above the routing algorithms route calls between P2 and P3 via node N1, and therefore use up bandwidth on links N1-N2 and N1-N3. This starves population P1 of network resources. Note that there is a link between N2 and N3 via node N4 which could be used, but was not used due to its higher cost or the order in which it was added to the link state database. So population P1 is starved of network resources unnecessarily. This type of inefficient routing is a problem that has not been seen before.

The present invention aims to solve the isolated nodes problem.

Said problem is solved by the features mentioned in the independent claims. Preferred embodiments of the invention are described in the dependant claims.

A main aspect of the invention is to solve the routing problem without requiring manual modification of the costs of the links involved, such that we can improve the overall efficiency of the network.

Therefore a method for routing a call through a communication network is implemented. Said method comprises the following steps of:
- identifying one or more critical links connected to the source node within the communication network;
- these critical links are signalled to other nodes throughout the network
- so that said routing calculation avoids including said critical links into said calculation.

In addition a network node for calculating a route for a call through a communication network is suggested. Said node comprises:
- identifying means for identifying one or more critical links connected to the source node;
- communication means for signalling these critical links to other nodes throughout the network and
- route calculation means for calculating routes wherein said critical links are avoided being included into said calculation.

Preferred embodiments of the present invention will now be described with reference to the accompanying drawing in which:
Figure 1 is an isolated nodes problem illustration,
Figure 2 shows the isolated node avoidance method.

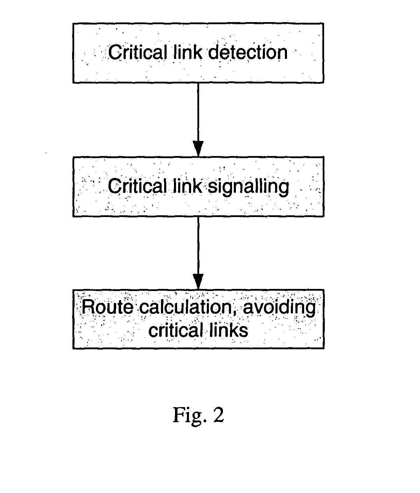

The invention is shown in the flowchart in figure 2. There are three distinct functional blocks required to solve this problem. Firstly critical links in the network need to be identified, secondly these critical links need to be signalled throughout the network so that source nodes can avoid using them if possible and thirdly the route calculation needs to be performed avoiding critical links. By updating the routing process in this way the QoS routing algorithms can avoid critical links if possible, thereby improving the QoS experienced by users of the network, particularly those which experience unfairness without these enhancements.

By updating the route calculation performed by source nodes such that the node can identify a link which is critical to a call then any critical links can be signalled to the nodes attached to the link, for example using an RSVP Notify message. Upon reception of an RSVP or RSVP-TE notify message indicating a critical link the criticalness of the link should be updated. This "criticalness" factor should be flooded to all other source nodes in the network, one method for doing this is using an OSPF Opaque LSA. In this way each source node will have knowledge of how critical a link is to other nodes in the network. The source node can then attempt to avoid using these critical links when setting up a call. This can be done by including the "criticality" of a link as part of the route calculation using either an additional constraint, or a weighting method.

If no alternative route is available then the critical link will have to be used, this is handled inherently by an inflated weight for a critical link. The weighting is scaled according to how many nodes the link is critical to.

During a route calculation the criticality of a link must be taken into account. Using, for example, the CSPF algorithm to calculate a route. The cost of candidate links is adjusted according to the number of nodes that this link is critical to. The more nodes there are that depend on the link, the higher the cost. The method is called "inflated weight" method. Links which are critical to the source node are not adjusted so that they can be used by the route calculation algorithm.

A preferred embodiment of this invention uses a two-pass route calculation technique. The first pass is to try and calculate a route avoiding all critical links not critical to the source node. If that route calculation fails then a 2^{nd} pass using the "inflated weights" mechanism will be used to see if a route is possible, this time using the inflated weights method. The advantage over other techniques is that if possible no critical link will be used, and if that is not possible the least critical links will be used first, based on the inflated weights method.

### Abbreviations

- CSPF: Constrained Shortest Path First
- LSA: Link State Advertisement
- OSPF: Open Shortest Path First
- QoS: Quality of Service
- RSVP: Resource Reservation Protocol
- RSVP-TE: RSVP with Traffic Engineering extensions

## Claims

1. A method for routing a call through a communication network comprising the steps of:
- identifying one or more critical links connected to the source node within the communication network;
- these critical links are signalled to other nodes throughout the network
- so that said routing calculation avoids including said critical links into said calculation.

2. A method according to claim 1, wherein the method uses a Quality of Service routing algorithm.

3. A method according to claim 1 or 2, wherein signalling to other nodes throughout the network is implemented by RSVP notify messages.

4. A method according to claim 1 or 2, wherein signalling to other nodes throughout the network is implemented by RSVP-TE notify messages.

5. A method according to claim 1 or 2, wherein signalling to other nodes throughout the network is implemented by OSPF LSA messages.

6. A method according to any one of the preceding claims, wherein for route calculation cost of identified critical links is inflated according to the number of nodes to that this link is critical.

7. A method according to claim 6, wherein firstly route calculation avoids including said critical links and if this route calculation fails then secondly cost of identified critical links is inflated according to claim 6.

8. A network node for calculating a route for a call through a communication network comprising:
- identifying means for identifying one or more critical links connected to the source node;
- communication means for signalling these critical links to other nodes throughout the network and
- route calculation means for calculating routes wherein said critical links are avoided being included into said calculation.

9. A network node according to claim 8, wherein said communication means for signalling use RSVP notify messages.

10. A network node according to claim 8, wherein said communication means for signalling use RSVP-TE notify messages.

11. A network node according to claim 8, wherein said communication means for signalling use OSPF LSA messages.

12. A network node according to any one of the claims 8 to 11, wherein route calculation means inflates cost of identified critical links according to the number of nodes to that this link is critical.
